# EUROPÄISCHE PATENTANMELDUNG

(11) **EP 2 853 423 A2**
(43) Veröffentlichungstag der Anmeldung: **01.04.2015**
(21) Anmeldenummer: 14003246.7
(22) Anmeldetag: 18.09.2014
(51) Int. Cl.: B60J 5/06, E05B 83/04, E05C 9/04, E05C 9/18, E05B 5/00, E05B 13/00, E05B 17/00

(54) **Schiebeplane für einen Nutzfahrzeugaufbau**

(30) Priorität: 30.09.2013 DE 202013008638 U
(71) Anmelder: Gebr. Titgemeyer Gmbh & Co. KG, 49084 Osnabrück (DE)
(72) Erfinder: Titgemeyer, Gerd-Christian, 49086 Osnabrück (DE); Titgemeyer, Manfred, 49076 Osnabrück (DE)
(74) Vertreter: Pott, Ulrich

(57) **Zusammenfassung**

Die Erfindung betrifft eine Schiebeplane für einen Nutzfahrzeugaufbau, die entlang eines Dachrahmens und eines Bodenrahmens des Nutzfahrzeugaufbaus verschieblich geführt ist, mit zumindest einer an einem Ende der Schiebeplane angeordneten Schließleiste, die mit einer über Gestängeteile (2, 3) bewegbare Schließhebel (4, 5) und einen Schwenkriegel (7) zur Betätigung der Gestängeteile (2, 3) umfassenden Schließvorrichtung (1) versehen ist, wobei der Schwenkriegel (7) der Schließvor-richtung (1) als ein aus einer Schließstellung in eine im Wesentlichen senkrecht zu der Seitenplane ausgerichtete Offnungsstellung bewegbares Bedienelement mit einem Griffstiel (7.1) zum Öffnen und Schließen der Seitenplane ausgebildet ist.

## Beschreibung

Die Erfindung bezieht sich auf eine Schiebeplane für einen Nutzfahrzeugaufbau, die entlang eines Dachrahmens und eines Bodenrahmens des Nutzfahrzeugaufbaus verschieblich geführt ist, mit zumindest einer an einem Ende der Schiebeplane angeordneten Schließleiste, die mit einer über Gestängeteile bewegbare Schließhebel und einen Schwenkriegel zur Betätigung der Gestängeteile umfassenden Schließvorrichtung versehen ist.

Schiebeplanen für Nutzfahrzeugaufbauten sind allgemein bekannt und dienen dazu, den Laderaum eines Nutzfahrzeuges für einen Beladungsvorgang zugänglich zu machen und nach einem Beladevorgang bzw. auch bei Leerfahrten den Laderaum seitlich zu verschließen. Dazu sind die Schiebeplanen in aller Regel über Rollen in Schienenführungen in dem Dachrahmen und auch vielfach am Bodenrahmen verschieblich geführt und können in horizontaler Richtung verschoben werden.

Zum Öffnen der Schiebeplane sind in den meisten Fällen an der Schiebeplane angebundene Griffbänder vorzusehen, die einem erhöhten Verschleiß unterliegen. So kann es zu Beschädigungen an der Schiebeplane im Bereich der Griffbänder kommen, weil Schiebeplanen vielfach an Dachrahmenteilen während einer Verschiebung entlang gleiten und mithin die Planenbewegung erschwert sind aufgrund der auftretenden Reibkräfte.

Aus der DE 10 2004 015 251 B3 ist eine Schiebeplane für einen Nutzfahrzeugaufbau der eingangs genannten Art bekannt, die an beiden Enden der Schiebeplane eine Schließleiste aus vorzugsweise einem metallischen Material aufweist, um die Plane über eine an der Schließleiste ausgebildete Schließvorrichtung mit Rungen, beispielsweise Eckrungen oder Mittelrungen des Nutzfahrzeugaufbaus zu verbinden. Dazu ist ein Schwenkriegel vorgesehen mit einem Fingereingriff, der mit zwei Gestängeteilen in Verbindung steht. Die Gestängeteile ihrerseits sind mit Schließhebeln verbunden, so dass über die Schließhebel die Schließleiste und damit die Schiebeplane an dem Dachrahmen und an dem Bodenrahmen des Nutzfahrzeugaufbaus zu verriegeln ist. Um die Schiebeplane zu verschließen, ist von einer Bedienperson die Schiebeplane mitsamt der Schließleiste und dem Schwenkriegel an die entsprechende Runge heranzuführen, wozu auch wiederum entsprechende Greifösen an der Schiebeplane vorzusehen sind. Dies ist nachteilig.

Es ist Aufgabe der vorliegenden Erfindung, eine Schiebeplane der eingangs genannten Art derart weiterzubilden, dass auf der einen Seite weiterhin die Verriegelung der Schiebeplane mit ihrer Schließleiste an einer Runge über zwei Schließhebel erhalten bleibt, die Schiebeplane jedoch mit einfachen baulichen Mitteln sicher zu verschieben ist.

Zur Lösung dieser Aufgabe zeichnet sich die Schiebeplane der eingangs genannten Art dadurch aus, dass der Schwenkriegel der Schließvorrichtung als ein aus einer Schließstellung in eine im Wesentlichen senkrecht zu der Seitenplane ausgerichtete Öffnungsstellung bewegbares Bedienelement mit einem Griffstiel zum Öffnen und Schließen der Seitenplane ausgebildet ist.

Durch den als Bedienelement mit integriertem Griffstiel ausgebildeten Schwenkriegel lassen sich nicht nur die Schließhebel über die Gestängeteile entriegeln und verriegeln. Vielmehr dient der Schwenkriegel in seiner Funktion als Bedienelement mit Griffstiel auch dazu, in seiner verschwenkten Entriegelungsstellung, in der er sich im Wesentlichen senkrecht zu der Seitenplane erstreckt, also in aller Regel um 90° aus seiner hochgeklappten Verriegelungsstellung herabgeklappt oder hochgeklappt ist, die Seitenplane zu verschieben, sei es in ihre Schließstellung oder sei es in ihre Öffnungsstellung. Dazu ist der Schwenkriegel in einer derartigen Höhe angebracht, dass eine Bedienperson den Griffstiel in der verschwenkten Stellung des Schwenkriegels sicher ergreifen und durch eine Gehbewegung mit ergriffenem Griffstiel die Schiebeplane sicher verschieben und führen kann. Der Schwenkriegel mit seinem Bedienelement und dem Griffstiel ist demnach in einer derartigen Höhe bzw. mit einem derartigen Höhenabstand zum Bodenrahmen des Nutzfahrzeugaufbaus vorgesehen, dass die Bedienperson mit üblichen Körperabmessungen den Schwenkriegel sicher ergreifen kann, sich aber auch mit diesem in seiner verschwenkten Stellung bei ergriffenem Griffstiel angenehm bewegen kann. Dadurch, dass auch in der verschwenkten Stellung der Schwenkriegel Teil der Schließleiste ist, sind die Aufschiebebewegungskräfte sicher auf die Schiebeplane zu überführen, ohne dass das Risiko einer Beschädigung der Schiebeplane besteht.

Bevorzugterweise ist der Schwenkriegel in seiner Schließstellung versenkt in einer Ausnehmung der Schließvorrichtung angeordnet, wobei jedoch die Ausnehmung im Hinblick auf den Griffstiel derartige Querabmessungen aufweist, dass ein Lageabstand zwischen seitlichen Wänden der Ausnehmung und den Griffstiel vorhanden ist, so dass eine Bedienperson den Griffstiel sicher ergreifen und aus der versenkten Verriegelungsstellung in die verschwenkte Öffnungs- und Bewegungsstellung der Schiebeplane verschwenken kann.

Bevorzugtermaßen ist der Schwenkriegel in seiner Verriegelungsstellung durch ein Rastelement verriegelbar. Dieses kann beispielsweise ein federbelastetes Rastelement mit einer Rastnase sein, das durch eine manuelle Betätigung durch eine Bedienperson, beispielsweise durch ein Eindrücken, entriegelbar ist. Nach einer derartigen Entriegelung ist der Schwenkriegel in seine Öffnungsstellung zu überführen.

Um Gestängeteile geradlinig, d.h. in vertikaler Ausrichtung translatorisch bewegen zu können, können Umlenker vorgesehen sein, um die Bewegung des um eine Horizontalachse bewegbaren Schwenkriegels in die translatorische geradlinige Bewegung zu überführen. Des Weiteren helfen dabei Ausgleichshebel mit, die für einen Ausgleich der jeweiligen Bewegungskomponenten sorgen.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: ohne Darstellung der Seitenplane und der Schließleiste ein Ausführungsbeispiel der Schließvorrichtung der Schließleiste mit Schwenkriegel, Gestängeteilen und zwei Schließhebeln im Bereich des Dachrahmens und des Bodenrahmens;
- Fig. 2: vergrößert einen Schließhebel mit zugeordnetem Verbindungsstück mit Ausgleichshebel und ausschnittsweise ein angrenzendes Gestängeteil für den Bodenrahmen mit strichpunktierter Darstellung von verschiedenen Stellungen des Schließhebels während einer Öffnungsbewegung;
- Fig. 3: eine zu Fig. 2 analoge Darstellung für den Schließhebel für den Dachrahmen;
- Fig. 4: ausschnittsweise das Ausführungsbeispiel nach Fig. 1 im Bereich des Griffstiels mit Rastelement, Umlenker und Gestängeteil, und
- Fig. 5: eine Seitenansicht auf das Ausführungsbeispiel nach Fig. 1 (ausschnittsweise).

In der Zeichnung sind gleichwirkende Teile mit übereinstimmenden Bezugsziffern versehen.

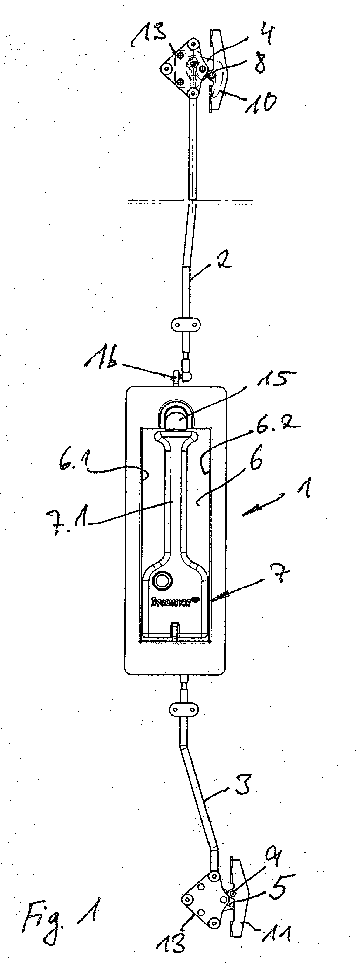

In Fig. 1 ist auf die Darstellung der Schiebeplane und die Darstellung der mit der Schiebeplane verbundenen Schließleiste der besseren Übersichtlichkeit wegen verzichtet worden. Die dargestellte Schließvorrichtung 1 ist jedoch Teil der Schließleiste, die mit einem Seitenende oder mit zwei Seitenenden der Schiebeplane zu verbinden ist. Des Weiteren ist auf die Darstellung eines Nutzfahrzeugaufbaus mit einem Dachrahmen und einem Bodenrahmen oder mit senkrechten Bauteilen wie z.B. Profilen, Rungen, Wandelementen oder dgl. der besseren Übersichtlichkeit wegen verzichtet worden. Dachrahmenteile und/oder auch Bodenrahmenteile können als Schienenprofile ausgebildet sein, in denen Laufrollen der Seiten-plane entlanggleiten können. Die Schließvorrichtung 1 weist Gestängeteile 2 und 3 auf, wobei das Gestängeteil 2 zu einem oberen Schließhebel 4 und das untere Gestängeteil 3 zu einem unteren Schließhebel 5 führt. Die Schließhebel können in senkrechte Bauteile wie z.B. Profile, aber auch in Dachrahmen oder Bodenrahmenteile eingreifen.

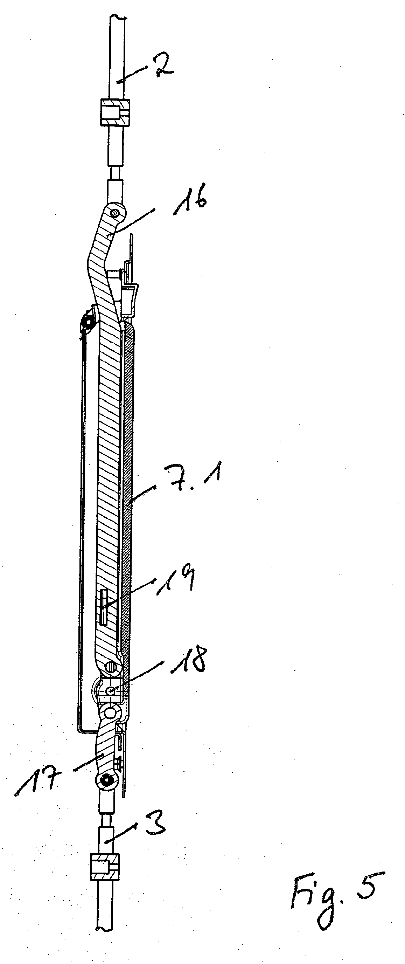

Des Weiteren hat die Schließvorrichtung 1 eine Ausnehmung 6, in der in der Fig. 1 dargestellten Verriegelungsstellung der Schwenkriegel 7 versenkt angeordnet ist. Dieser Schwenkriegel 7 ist als Bedienelement mit einem Griffstiel 7.1 ausgebildet. Dieser hat einen zentralen langgezogenen Griffbereich mit solchen Querabmessungen, die es erlauben, dass zwischen den Seitenwandungen 6.1 und 6.2 und dem Griffstiel 7.1 ein so großer Lageabstand vorhanden ist, dass der Griffstiel 7.1 sicher von einer Bedienperson ergriffen werden kann. Der Schwenkriegel 7 ist um eine horizontale Achse 18 (Fig. 5) zu verschwenken, wobei er in seiner Öffnungsstellung sich im Wesentlichen quer zur Längserstreckung der Ausnehmung 6 (Fig. 1) erstreckt und damit im Wesentlichen senkrecht zur Seitenplane.

Die Schwenkhebel 4 und 5 sind in der in Fig. 1 gezeigten Schließstellung an Bolzen 8 und 9 eines Anbindungsteiles 10 bzw. 11 der Stirnwand/Portalsäule im Bereich des Dachrahmens bzw. des Bodenrahmens gelegen und umgreifen diese, so dass die Seitenplane sich in einem verriegelten Zustand befindet.

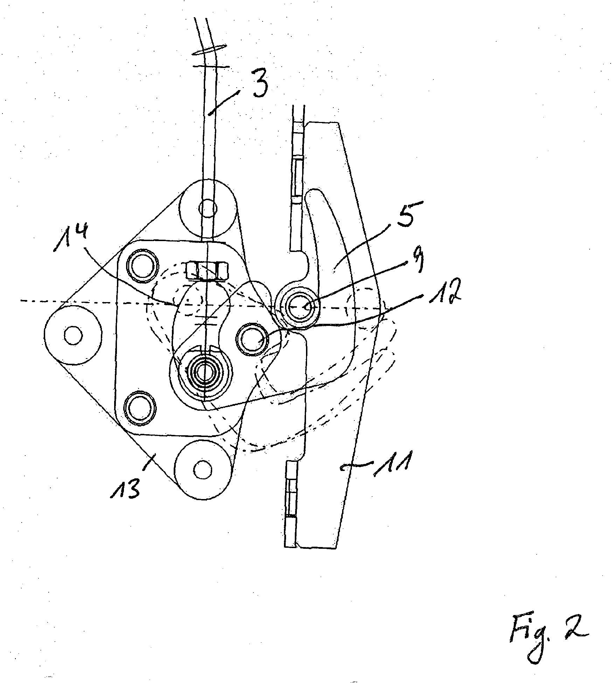

In Fig. 2 ist der untere Schließhebel 5 gezeigt. Mit durchgezogenen Linien ist der Schließhebel 5 dargestellt in seiner Schließstellung, in der er den Bolzen 9 umgreift. Der Schließhebel 5 ist um die Achse 12 zu verschwenken, und zwar wie dies strichpunktiert in Fig. 2 dargestellt ist, für verschiedene Entriegelungsstellungen. Die Schwenkachse 12 ist dabei in einem Verbindungsstück 13 angeordnet, das ortsfest an der Schließleiste der Seitenplane montiert ist. Zusätzlich ist ein Ausgleichshebel 14 vorgesehen, der im Verlaufe der Schwenkbewegung des Schwenkriegels 7 (Fig. 1) dafür sorgt, dass die Schwenkbewegung in eine geradlinige Bewegung des Gestängeteils 3 überführt wird bzw. umgekehrt, so dass die geradlinige Auf- und Abbewegung des Gestängeteils 3 in die Verschwenkbewegung des Schließhebels 5 überführt werden kann.

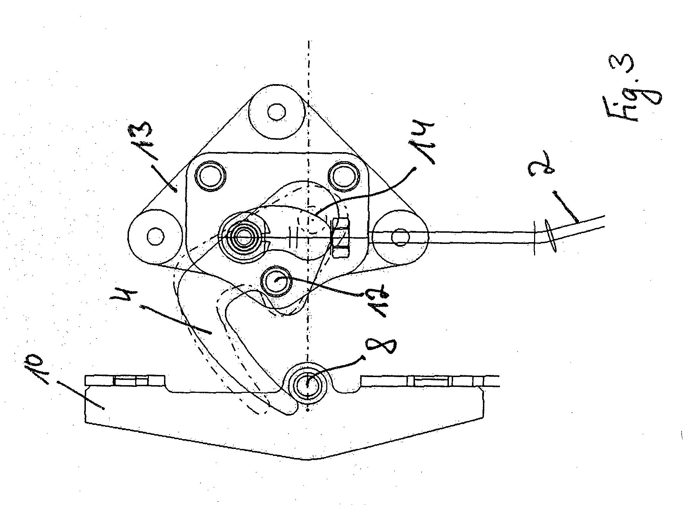

In Fig. 3 ist gleiches noch einmal gezeigt für den oberen Schließhebel 4 in ansonsten völlig analogem Aufbau der Teile wie für den Schließhebel 5 des Bodenrahmens zuvor beschrieben.

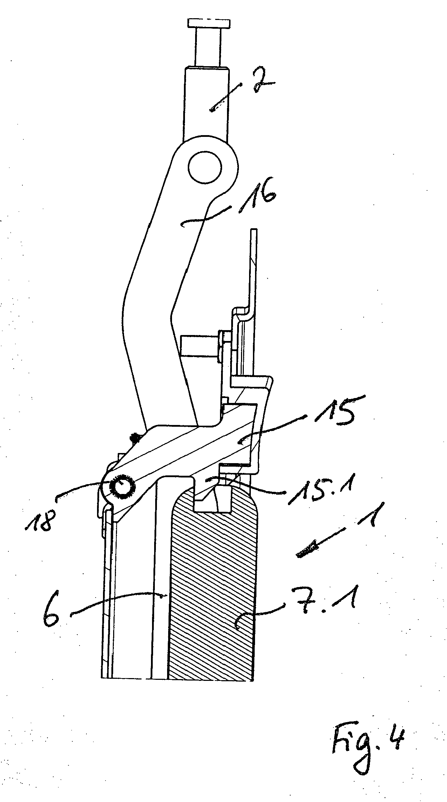

Fig. 4 zeigt ausschnittsweise und teilweise geschnitten die Schließvorrichtung 1 mit dem Griffstiel 7.1. Dort ist auch ein Rastelement 15 mit einer Rastnase 15.1 ersichtlich, wobei das Rastelement 15 um die Achse 18 verschwenkt werden kann. Bei einer entsprechenden Betätigung durch Herunterdrücken kann das Rastelement 15 betätigt werden, wonach der Griffstiel 7.1 entriegelt wird und in dem gezeigten Ausführungsbeispiel abgeklappt werden kann. Auch hier sind wieder die Gestängeteile ersichtlich, nämlich das Gestängeteil 2 und den dazwischen gelegenen Umlenker 16, der ebenfalls aus der Darstellung nach Fig. 5 ersichtlich ist. Dort ist auch der untere Umlenker 17 ersichtlich, der mit dem Gestängeteil 3 für den unteren Schließhebel 5 (Fig. 1)verbunden ist. Die Schwenkachse des Griffstiels 7.1 ist mit 18 beziffert. Durch die entsprechende Abklappbewegung oder eine Hochschwenkbewegung wird auf die jeweiligen Umlenker 16 und 17 eine Bewegung ausgeübt, die die entsprechenden Gestängeteile 2 bzw. 3 absenkt bzw. anhebt, wobei die entsprechende Anhebbewegung und/oder die entsprechende Absenkbewegung zu einer Verriegelung bzw. Entriegelung der Schließhebel 4 bzw. 5 führt.

In dem dargestellten Ausführungsbeispiel wird der Griffstiel 7.1 in seine abgeklappte Bedienstellung überführt, in der die Schließhebel 4 und 5 vollständig entriegelt sind. In dieser abgeklappten Bedienstellung bzw. Öffnungs- oder Entriegelungsstellung kann der Griffstiel 7.1 sicher von einer Bedienperson ergriffen werden. Bei diesem Griffstiel 7.1 ist dann die Seitenplane aufzuschieben bzw. wieder zu schließen, wobei die Schiebekräfte sicher auf die Wandungen der Schließvorrichtung in der Ausnehmung 6 übertragen werden. Da die Schließvorrichtung 1 mit der Schließleiste verbunden ist, können die entsprechenden Aufschiebe- bzw. Zuschiebebewegungen auch sicher und ohne die Gefahr einer Beschädigung der Seitenplane auf die Seitenplane übertragen werden.

## Patentansprüche

1. Schiebeplane für einen Nutzfahrzeugaufbau, die entlang eines Dachrahmens und eines Bodenrahmens des Nutzfahrzeugaufbaus verschieblich geführt ist, mit zumindest einer an einem Ende der Schiebeplane angeordneten Schließleiste, die mit einer über Gestängeteile (2, 3) bewegbare Schließhebel (4, 5) und einen Schwenkriegel (7) zur Betätigung der Gestängeteile (2, 3) umfassenden Schließvorrichtung (1) versehen ist, **dadurch gekennzeichnet, dass** der Schwenkriegel (7) der Schließvorrichtung (1) als ein aus einer Schließstellung in eine im Wesentlichen senkrecht zu der Seitenplane ausgerichtete Öffnungsstellung bewegbares Bedienelement mit einem Griffstiel (7.1) zum Öffnen und Schließen der Seitenplane ausgebildet ist.

2. Schiebeplane nach Anspruch 1, **dadurch gekennzeichnet, dass** der Schwenkriegel (7) in seiner Schließstellung versenkt in einer Ausnehmung (6) der Schließvorrichtung (1) angeordnet ist und der Griffstiel (7.1) einen Lageabstand zu seitlichen Wänden (6.1, 6.2) der Ausnehmung (6) aufweist.

3. Schiebeplane nach Anspruch 1 oder 2, **dadurch gekennzeichnet, dass** der Griffstiel (7.1) des Schwenkriegels (7) durch ein manuell bedienbares Rastelement (15) in seiner Schließstellung verriegelbar ist und nach Betätigung des Rastelementes (15) in seine im Wesentlichen senkrecht zur Seitenplane ausgerichtete Öffnungsstellung überführbar ist.

4. Schiebeplane nach einem der Ansprüche 1 bis 3, **dadurch gekennzeichnet, dass** der Schwenkriegel (7) um eine Schwenkachse (18) verschwenkbar und mit Umlenkern (16, 17) verbunden ist, die mit den Gestängeteilen (2, 3) von Schließhebeln (4, 5) verbunden sind.

5. Schiebeplane nach einem der Ansprüche 1 bis 4, **dadurch gekennzeichnet, dass** ein Schließhebel (4, 5) um eine Schwenkachse bewegbar ist, die mit einem Ausgleichshebel (14) zur Herbeiführung einer geradlinigen Bewegung von Gestängeteilen (2, 3) zusammenwirkt.

6. Schiebeplane nach Anspruch 5, **dadurch gekennzeichnet, dass** die Gestängeteile (2, 3) in einer ortsfesten Führung für eine geradlinige Bewegung der Gestängeteile (2, 3) angeordnet sind.

7. Schiebeplane nach einem der Ansprüche 1 bis 6, **dadurch gekennzeichnet, dass** in einem Umlenker (16) ein Schlitz (19) für eine Schlossfalle eines Schlosses des Schwenkriegels (7) angeordnet ist.

8. Schiebeplane nach einem der Ansprüche 1 bis 7, **dadurch gekennzeichnet, dass** ein Gestängeteil (2, 3) an einem Verbindungsstück (13) vorgesehen ist, das ortsfest mit der Schließleiste verbunden ist und dass an dem Verbindungsstück (13) ein Schließhebel (4, 5) schwenkbeweglich angelenkt ist.
